# EUROPÄISCHE PATENTSCHRIFT

(11) **EP 1 634 493 B1**
(45) Veröffentlichungstag und Bekanntmachung des Hinweises auf die Patenterteilung: **12.03.2008**
(21) Anmeldenummer: 05019958.7
(22) Anmeldetag: 14.09.2005
(51) Int. Cl.: A01G 31/00, A01G 13/02

(54) **Vegetationselement, Verkaufseinheit aus einem Vegetationselement und Verfahren zur Herstellung einer Verkaufseinheit**
Vegetation element, sales unit with a vegetation element and method for producing a sales unit
Elément de végétation, unité de vente avec un elément de végétation et procédé pour produire une unité de vente

(30) Priorität: 14.09.2004 DE 102004044896
(43) Veröffentlichungstag der Anmeldung: 15.03.2006
(73) Patentinhaber: Helix Pflanzen GmbH, 70806 Kornwestheim (DE)
(72) Erfinder: Müller, Hans, 70806 Kornwestheim (DE)
(74) Vertreter: Maser, Jochen

(56) Entgegenhaltungen:
- AT-B- 359 762
- DE-U1- 8 205 695
- FR-A- 2 712 140
- US-A- 4 287 682
- PATENT ABSTRACTS OF JAPAN Bd. 2000, Nr. 15, 6. April 2001 (2001-04-06) & JP 2000 333529 A (TAMURA KOJI), 5. Dezember 2000 (2000-12-05)

## Beschreibung

Die Erfindung betrifft ein Vegetationselement, eine Verkaufseinheit aus einem Vegetationselement und Pflanzenmaterial sowie ein Verfahren zur Herstellung einer solchen Verkaufseinheit.

Vegetationselemente der eingangs genannten Art, wie sie zum Beispiel aus der JP 2000 333 529 A bekannt. Ein solches Vegetationselement weist eine Netztasche auf, welche eine Füllung aus Holzkohle, Holzschnipsel, Sägestreu, Streu, Schilfgras oder Heu umfassen kann. Zusätzlich werden in dieses Füllmaterial biologisch abbaubare Container zur Aufzucht von Pflanzen eingesetzt, welche besondere Nährstoffe umfassen, damit diese Pflanzen schnell an- und aufwachsen können. Dieses Vegetationselement weist den Nachteil auf, dass das Material der Netztasche bzw. die Hülle dieser Netztasche aus einem anderen Material hergestellt ist als das Füllmaterial. Dadurch ist die Verrottung der für das Vegetationselement verwendeten Materialen unterschiedlich. Zusätzlich ist deren Herstellung aufwendig, da mehrere unterschiedliche Materialien bereitzustellen sind. Die Wurzelbindung in dem Vegetationselement ist darüber hinaus durch die vorgesehenen Füllmaterialien die zum Verkleben oder Verklumpen neigen, stark beeinträchtigt. Deshalb wird der Einsatz von zusätzlichen Töpfen mit Substrat vorgeschlagen, damit möglichst schnell eine Wurzelbildung von Jungpflanzen in den Töpfen innerhalb diesem Vegetationselement bzw. der Netztasche ermöglicht ist, um anschließend die Pflanzen einzeln zu verkaufen.

Des Weiteren geht aus der AT 359 762 B eine Vorrichtung zum Aufziehen von Pflanzen an erosionsgefährdeten Hängen hervor, welche einen schlauch- oder rohrförmigen, mit Nährstoffen oder Samen versehenen Träger umfasst. Dieser Träger ist mit einer Hülle aus einem verrottbaren netzartigen Schicht ummantelt. Der Kern besteht dabei bspw. aus Torf, organischen oder anorganischen Düngemitteln, Meeresalgen oder dergleichen. Somit ist der Kern als auch das Füllmaterial abweichend von der gitterförmigen Hülle ausgebildet, so dass eine ungleiche Verrottung stattfindet. Darüber hinaus ist eine solche Vorrichtung nicht zum Anwachsen von Jungpflanzen und einem anschließenden Verkauf der Jungpflanzen zusammen mit dem Vegetationselement vorgesehen. Vielmehr werden solche Vorrichtungen durch entsprechende Befestigungselemente fest mit dem Untergrund verankert. Dadurch wird zunächst die Vorrichtung ausgelegt, um anschließend darin Jungpflanzen einzusetzen und aufzuziehen. Diese Handhabung ist sehr aufwendig.

Der Bedarf zur Bepflanzung von Böschungen, Hanggrundstücken oder Nebenflächen, die nach dem einmaligen Bepflanzen keinen weiteren Pflegeaufwand erfordern dürfen, steigt stetig an. Die vorgenannten Vegetatioriselemente beziehungsweise Pflanzenmatten sind hierzu ungeeignet beziehungsweise führen beim Einbringen in einem Gefälle zu Auswaschungen des gärtnerischen Kultursubstrats, so dass ein Anwachsen der Jungpflanzen nicht oder nur bedingt gegeben ist. Darüber hinaus sind solche Vegetationselemente als auch Pflanzenmatten nicht zum Abdecken von größeren Flächen geeignet, da diese bei größeren Flächen gewichtsmäßig sehr schwer in der Handhabung sind oder nur mit Unterstützung von Hebe- und Transportgeräten zum Bestimmungsort übergeführt werden können.

Der Erfindung liegt deshalb die Aufgabe zugrunde, ein Vegetationselement, eine Verkaufseinheit, bestehend aus solch einem Vegetationselement sowie ein Verfahren zur Herstellung einer solchen Verkaufseinheit vorzuschlagen, das ermöglicht, dass verschiedene Einsatzbereiche abgedeckt werden können, eine leichte Handhabung gegeben ist sowie ein bodendeckendes Vegetationselement beziehungsweise Verkaufseinheit am laufenden Meter geschaffen wird.

Diese Aufgabe wird erfindungsgemäß durch die Merkmale der Ansprüche 1, 7 und 9 gelöst.

Das erfindungsgemäße Vegetationselement weist den Vorteil auf, dass es aus einem einheitlichen Material besteht und die Bestandteile Hülle und Trägerschicht, also Hülle und Füllmaterial aus einem einheitlichen Material hergestellt werden können. Durch die einheitliche Verrottung der Hülle als auch der Trägerschicht wird darüber hinaus ermöglicht, dass eine Behinderung des Pflanzenwachstums nicht erfolgt. Das erfindungsgemäße Vegetationselement weist des Weiteren den Vorteil auf, dass das eine Trägerschicht aus wirr zueinander angeordneten Einzelfasern umfasst, welches eine Füllung einer Hülle bildet, die gitter- oder maschenförmig ausgebildet, wird ermöglicht, dass dem in das Vegetationselement ein- oder aufgebrachten Pflanzenmaterial eine Stütze zum Anwachsen und Ausbilden von Wurzeln gegeben wird, wobei gleichzeitig eine leichte Handhabung aufgrund des geringen Gewichtes des Vegetationselementes gegeben ist. Durch ein solches Vegetationselement wird quasi eine Statik zwischen dem einzelnen Pflanzenmaterial gebildet, um eine größere Menge an Einzelpflanzen gemeinsam auf einer zu bepflanzenden erdgebundenen Fläche aufzubringen. Durch die gitter- oder maschenförmige Hülle wird die Füllung aus wirr zueinander angeordneten Einzelfasern zusammengehalten, wobei gleichzeitig eine lockere Füllung ausgebildet ist, in der Wurzeln des Pflanzenmaterials sich schnell bilden können und ihren Halt finden. Solche Vegetationselemente eignen sich als Mulchmatte, Erosionsmatte und/oder als Vegetationsmatte, so dass mehrere Funktionen in einem verwirklicht sein können. Darüber hinaus weisen solche Matten eine erhöhte Regenerationskraft auf, um selbst nach einer Trockenperiode ein schnelles Regenerieren zu ermögliche. Diese Wurzeln finden darin auch ein Maximum an Luftkapazität vor. Die Entwicklung wird dadurch besonders gefördert. Insbesondere sind solche Matten besonders gut geeignet zur Begrünung beziehungsweise zur Bepflanzung von Böschungen und Steilhängen, als Stra-Benbegieitgrün und überall dort, wo nachhaltig Pflegekosten gespart werden sollen.

Nach einer vorteilhaften Ausgestaltung der Erfindung ist vorgesehen, dass die Trägerschicht und die Hülle aus einem einheitlichen verrottbaren Material, hergestellt sind. Durch die Verwendung des einheitlichen Materials kann in gleichem Maße eine Verrottung der Hülle als auch der Trägerschicht erfolgen, so dass bis zum vollständigen Anwachsen des Pflanzenmaterials am Untergrund eine hinreichende Fixierung des Pflanzenmaterials ermöglicht ist. Bevorzugt ist die Trägerschicht und die Hülle aus Kokosfasern hergestellt. Solche Fasern verrotten erst nach einer längeren Zeitdauer und weisen gleichzeitig den Vorteil auf, dass diese eine lockere und luftige Struktur bei gleichzeitig hinreichender Festigkeit aufweisen. Insbesondere beim Einsatz von solchen Vegetationselementen in Böschungen oder in Steilhängen wird dadurch ermöglicht, dass das Wasser schnell abfließen kann, ohne dass das Pflanzenmaterial aus dem Vegetationselement herausgelöst wird. Alternativ können weitere verrottbare Natur- oder Kunstfasern oder Faservliese vorgesehen sein, die die vorbeschriebenen Anforderungen erfüllen.

Das Vegetationselement ist bevorzugt kultursubstratfrei zum Anwachsen von Pflanzenmaterial vorgesehen. Entgegen dem im Stand der Technik beschriebenen Vegetationselementen und Pflanzenmatten hat sich erstaunlicheniveise gezeigt, dass ohne Kultursubstrat eine schnelle Ausbildung von Wurzeln oder Wurzelballen des Pflanzenmaterials ermöglicht ist.

Eine besonders bevorzugte Ausführungsform des Vegetationselementes sieht vor, dass die Hülle und Trägerschicht eine kissenförmige Einheit bilden. Somit sind die Einzelfasern der Trägerschicht innerhalb der Hülle gesichert, wobei andererseits aufgrund der gitter- und maschenförmigen Hülle ein einfaches Bestücken des Vegetationselementes mit Jungpftanzen oder Stecklingen ermöglicht ist. Gleichzeitig wird durch die gitter- und maschenförmige Hülle das Setzen der Jungpflanzen und Stecklinge in einem bestimmten Abstand zueinander durch die jeweilige Maschenweite beziehungsweise die Anzahl der freibleibenden Maschen erleichtert. Gleichzeitig weist die kissenförmige Einheit den Vorteil auf, dass unabhängig der Einbausituation dickere oder dünnere kissenförmige Einheiten gebildet werden können. Solche kissenförmigen Einheiten können ein Flächengewicht von beispielsweise 2 bis 5 kg/m² umfassen.

Solche Vegetationselemente können in ihrer Aufsicht vorzugsweise die Form eines regelmäßigen Vielecks, insbesondere Dreiecks, Vierecks, Fünfecks oder Sechsecks, aufweisen. Dadurch können definierte Anschlussflächen gebildet werden, wodurch sich mehrere Vegetationselemente bündig aneinander reihen lassen, um eine große Fläche abzudecken. Darüber hinaus kann vorgesehen sein, dass bei der Anordnung von Vegetationselementen in Böschungen oder Steilhängen ein Randbereich entlang einer Stirnseite des Vegetationselementes verjüngt ausgebildet ist, um mit einem analogen Randbereich eines weiteren Vegetationselementes zusammenzuwirken. Dadurch kann insbesondere an Steilhängen eine Art schuppenförmige oder dachziegelförmige Anordnung mit teilweiser Überlappung vorgesehen sein.

Nach einer weiteren vorteilhaften Ausgestaltung der Erfindung ist vorgesehen, dass in seitlichen Randbereichen der Hülle Verbindungsabschnitte vorgesehen sind, durch die die einzelnen nebeneinander auf erdgebundenen Flächen aufliegenden Einheiten miteinander koppelbar oder verbindbar sind. Solche Verbindungsabschnitte können eine zusätzliche Verbindung oder Vernetzung der einzelnen Einheiten bilden, um eine zusammenhängende große Fläche zu bilden.

Die erfindungsgemäße Verkaufseinheit aus einem erfindungsgemäßen Vegetationselement mit Pflanzenmaterial weist den Vorteil auf, dass solche Vegetationselemente mit Pflanzenmaterial in verschiedenen Bereichen von erdgebundenen Flächen auf einen vorbereiteten Boden aufgelegt werden und nach kurzer Zeit ein Anwachsen ermöglicht ist. Zur Vorbereitung des Bodens ist die Herstellung einer Rohplanie erforderlich, wobei die Dicke des Vegetationselementes im Hinblick auf die Fertighöhe zu berücksichtigen ist.

Eine solche Verkaufseinheit weist des Weiteren den Vorteil auf, dass eine Zeitersparnis durch eine einfache Handhabung mit sofortigem Ergebnis ermöglicht ist. Zusätzlich ist ein minimaler Pflegeaufwand gegeben.

Die Verkaufseinheit ist bevorzugt dann verwirklicht, wenn die Wurzeln oder Wurzelballen des jeweiligen Pflanzenmaterials in der Hülle verankert sind und vorzugsweise wenigstens 30 % der Auflagefläche der Hülle des Vegetationselementes von Wurzeln oder Wurzelballen überdeckt sind. Dadurch ist ein schnelles Anwachsen sichergestellt, da die Pflanze bereits durchgewurzelt ist. Zusätzlich bestehen vielseitige Gestaltungsmöglichkeiten durch den Einsatz von verschiedenen Pflanzenarten, die in einem gemeinsamen Vegetationselement zur Anzucht vorgesehen sein können.

Des Weiteren ist erfindungsgemäß vorgesehen, dass zur Herstellung von Verkaufseinheiten eine vorbestimmte Anzahl von Jungpflanzen oder Stecklingen eines Pflanzenmaterials in die Trägerschicht des Vegetationselementes eingesetzt wird und dass die Anzucht so lange erfolgt, bis die Wurzel oder Wurzelballen des Pflanzenmaterials aus der Trägerschicht herausgewachsen sind.

Während der Anzucht von Jungpflanzen oder Stecklingen kann bevorzugt das Vegetationselement in einem großflächigen Behälter gehalten werden, so dass das Wurzelwerk im Wasser steht beziehungsweise die erforderliche Feuchtigkeit von unten erhält. Ebenfalls kann vorgesehen sein, dass die Anzucht durch eine Berieselung von oben erfolgt oder eine Kombination vorgesehen ist.

Die Erfindung sowie weitere vorteilhafte Ausführungsformen und Weiterbildungen derselben werden im Folgenden anhand dem in den Zeichnungen dargestellten Beispiel näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine schematische Draufsicht auf ein erfindungsgemäßes Vegetationselement,
- Figur 2: eine schematische Schnittdarstellung des Vegetationselementes gemäß Figur 1 entlang der Linie I-I und
- Figur 3: eine schematische Ansicht von unten auf das Vegetationselement gemäß Figur 1.

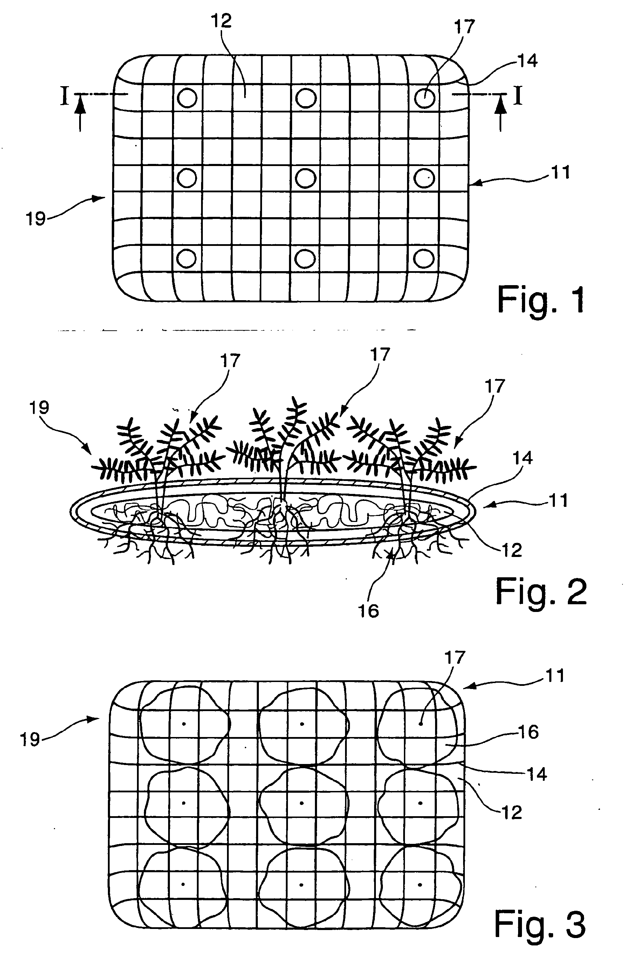

In Figur 1 ist eine schematische Draufsicht auf ein erfindungsgemäßes Vegetationselement 11 dargestellt. Figur 2 zeigt eine schematische Schnittdarstellung entlang der Linie I-I in Figur 1. Das Vegetationselement 11 umfasst eine Trägerschicht 12, die von einer maschen- oder gitterförmigen Hülle 14 umgeben ist. Die Hülle 14 und Trägerschicht 12 sind bevorzugt aus demselben verrottbaren Material, wie beispielsweise Kokosfasern, hergestellt. Bevorzugt ist vorgesehen, dass ein Verrotten des Materials nicht vor einem halben Jahr nach dem Verlegen an dem Bestimmungsort erfolgt. Dadurch kann ein Anwachsen und Verhaken der Wurzeln mit dem Untergrund sichergestellt werden. Weitere alternativen Natur- und/oder Kunststofffasern, welche ähnliche Eigenschaften aufweisen, können ebenfalls vorgesehen sein. Solche unterschiedliche Natur- und/oder Kunststofffasern können auch gemischt eingesetzt werden.

Alternativ kann vorgesehen sein, dass die Verrottungsdauer der einzelnen Elemente, wie Trägerschicht 12 und Hülle 14, unterschiedlich ist, so dass beispielsweise die Hülle 14 eine zeitlich längere Stütze für Pflanzenmaterial 17 bildet als die Trägerschicht 12, insbesondere beim Einsatz an Böschungen oder Steilhängen. In anderen Anwendungsfällen kann vorgesehen sein, dass die Verrottung der Trägerschicht 12 erst dann beginnt, wenn die Verrottung der Hülle 14 bereits stark fortgeschritten ist. Die Trägerschicht 12 setzt sich aus wirr zueinander angeordneten Einzelfasern zusammen, die zur Wurzelbildung des Pflanzenmaterials 17 hinreichend locker ausgebildet ist, jedoch andererseits Wurzeln 16 des Pflanzenmaterials 17 einen hinreichenden Halt gibt. Durch die Lockerheit ist eine gute Belüftung gegeben. Die Einzelfasern können auch teilweise verflochten oder vernadelt sein. Zusätzlich können unterschiedlich lange Einzelfasern miteinander kombiniert werden, um die Trägerschicht 12 auszubilden.

Das Vegetationselement 11 ist gemäß dem Ausführungsbeispiel als kissenförmige Einheit ausgebildet, wobei die Dicke der Befüllung wahlweise bestimmbar ist. Bei beispielsweise Bodendeckern oder flach über der Oberfläche wachsenden Pflanzen genügt eine dünnere Trägerschicht 12, wohingegen bei Gehölzen oder dergleichen bevorzugt eine dickere Trägerschicht 12 vorgesehen ist. Durch die Befüllung beziehungsweise Dicke der kissenförmigen Einheit kann auch eine Art Temperatursperre zwischen der Oberseite und Unterseite der Hülle 14 gegeben sein. Dadurch können die Vegetationselemente 11 auch an heißen Tagen und/oder in Trockenperioden ausgelegt werden. Durch die Wirkung als Temperatursperre wird der Untergrund vor zu schnellem Austrocknen geschützt. Analoges gilt zu Beginn der Frostperiode, so dass ein Durchfrieren des Bodens verzögert wird.

Das Vegetationselement 11 weist eine geometrische Form auf, die es erlaubt, dass mehrere Vegetationselemente 11 zu einer zusammenhängenden Fläche oder in einer Reihe hintereinander und nebeneinander angeordnet werden.

Zur Aufzucht von Jungpflanzen oder Stecklingen ist vorgesehen, dass das Pflanzenmaterial 17 in die Trägerschicht 12 eingebracht wird, wobei mittels Hand oder einem Werkzeug an der vorgesehenen Stelle eine Ausbuchtung durch Verdrängen der einzelnen Fasern geschaffen wird. Im Anschluss daran wird die Jungpflanze oder der Steckling des Pflanzenmaterials 17 eingesetzt. Durch die gitter- oder maschenförmige Ausgestaltung der Hülle 14 kann eine rasterförmige Anordnung zur gleichmäßigen Bepflanzung des Vegetationselementes 11 erleichtert sein. Die Gitter- oder Maschenstruktur der Hülle 14 kann flexibel sein, so dass sich die Maschenweite beim Einpflanzen von Jungpflanzen oder Stecklingen aufweiten lässt. Die Maschenweite kann an die Dicke der Stämme oder Äste der Jungpflanzen angepasst sein, so dass ein zusätzlicher Halt geschaffen wird, jedoch ein Einschnüren ausbleibt. Die Maschenweite kann in einem Bereich zwischen 1 und 10 cm liegen. Die Hülle 14 ist bevorzugt aus einzelnen Kordeln, welche bevorzugt aus Einzetfasern bestehen, hergestellt, die zu einer Maschenstruktur verarbeitet sind.

Solche Vegetationselemente 11 werden bevorzugt in großflächigen Behältern mit relativ geringer Höhe vorgesehen, damit jede Einheit beziehungsweise jedes Vegetationselement 11 individuell mit Wasser versorgt werden kann. Alternativ kann auch vorgesehen sein, dass eine Berieselung von oben erfolgt oder dass mehrere Vegetationselemente zusammen in einem Behälter oder auf einem Untergrund zur Aufzucht und Bildung von Wurzeln oder Wurzelballen vorgesehen sein können. Das Pflanzenmaterial erhält sämtliche Nährstoffe aus der zugeführten Flüssigkeit, wobei sich mit zunehmendem Wachstum die Wurzeln in der Trägerschicht 12 verankern.

Eine Verkaufseinheit aus einem Vegetationselement 11 und Pflanzenmaterial 17 ist dann hergestellt, wenn die Wurzeln 16 zumindest teilweise aus der Trägerschicht 12 hinausragen. Bevorzugt ist vorgesehen, dass die Wurzeln in die Hülle 14 eingreifen oder diese umfassen und insbesondere Wurzelballen ausbilden, wie dies beispielsweise aus Figur 3 hervorgeht. Nach einer bevorzugten Ausführungsform ist vorgesehen, dass wenigstens 30 % der Auflagefläche des Vegetationselementes 11 mit Wurzelwerk oder Wurzelballen überdeckt ist.

Die Ausgestaltung des Vegetationselementes 11 aus durchlässigem und verrottbarem Material, wie beispielsweise Kokosfaser, weist des Weiteren den Vorteil auf, dass die Vegetationselemente nach dem Verlegen auch zugeschnitten werden können, indem die Wurzeln mit einem Messer getrennt und die Kokosfaser mit einem Messer oder einer Papierschere auseinander getrennt werden.

Alle vorbeschriebenen Merkmale sind jeweils für sich erfindungswesentlich und können beliebig miteinander kombiniert werden.

## Patentansprüche

1. Vegetationselement zum Auflegen auf erdgebunden Flächen mit einer Trägerschicht (12) aus verrottbarem Material, das zum Ein- und Aufbringen von Pflanzenmaterial (17) vorgesehen ist, wobei die Trägerschicht (12) von einer maschen- oder gitterförmigen Hülle (14) umgeben ist, die aus verrottbarem Material hergestellt ist und dass die Trägerschicht (12) aus wirr zueinander angeordneten Einzelfasern eine Füllung der Hülle (14) bildet, **dadurch gekennzeichnet, dass** die Trägerschicht (12) und Hülle (14) aus einem gemeinsamen durchlässigen und verrottbaren Material ausgebildet sind.

2. Vegetationselement nach Anspruch 1, **dadurch gekennzeichnet, dass** die Trägerschicht (12) und Hülle (14) aus Kokosfasern hergestellt ist.

3. Vegetationselement nach Anspruch 1, **dadurch gekennzeichnet, dass** die Trägerschicht (12) und/oder Hülle (14) kultursubstratfrei zum Anwachsen von Pflanzenmaterial (17) einsetzbar ist.

4. Vegetationselement nach einem der vorhergehenden Ansprüche, **dadurch gekennzeichnet, dass** die Trägerschicht (12) und die Hülle (14) eine kissenförmige Einheit bilden.

5. Vegetationselement nach einem der vorhergehenden Ansprüche, **dadurch gekennzeichnet, dass** die Trägerschicht (12) und Hülle (14) in ihrer Aufsicht die Form eines regelmäßigen Vieleckes, insbesondere Dreiecks, Vierecks, Fünfecks oder Sechsecks, aufweisen.

6. Vegetationselement nach einem der vorhergehenden Ansprüche, **dadurch gekennzeichnet, dass** an seitlichen Randbereichen der Hülle (14) Verbindungsabschnitte vorgesehen sind, durch welche die einzelnen nebeneinander angeordneten, auf erdgebundenen Flächen aufliegenden Vegetationselementen (11) miteinander koppelbar sind.

7. Verkaufseinheit aus einem Vegetationselement (11) und Pflanzenmaterial (17), welches in dem Vegetationselement (11) angewachsen ist, wobei das Vegetationselement zum Auflegen auf erdgebunden Flächen eine Trägerschicht (12) aufweist, die von einer maschen- oder gitterförmigen Hülle (14) umgeben ist, die aus einem gemeinsam durchlässigen und verrottbarem Material ausgebildet sind, wobei die Trägerschicht (12) aus wirr zueinander angeordneten Einzelfasern eine Füllung der Hülle (14) bildet, **dadurch gekennzeichnet, dass** Wurzeln (16) oder Wurzelballen des Pflanzenmaterials (17) zumindest teilweise aus der Trägerschicht (12) herausragt.

8. Verkaufseinheit nach Anspruch 7, **dadurch gekennzeichnet, dass** die Wurzeln (16) oder Wurzelballen des Pflanzenmaterials (17) in der Hülle (14) verankert sind und vorzugsweise wenigstens 30 % einer Auflagefläche des Vegetationselementes (11) auf erdgebundenen Flächen von Wurzeln (16) oder Wurzelballen des Pflanzenmaterials (17) überdeckt sind.

9. Verfahren zur Herstellung von Verkaufseinheiten nach Anspruch 8, **dadurch gekennzeichnet, dass** eine Anzahl von Jungpflanzen oder Stecklingen eines Pflanzenmaterial (17) in die Trägerschicht (12) des Vegetationselementes (11) eingesetzt wird und dass eine Anzucht so lange erfolgt, bis die Wurzeln (16) oder Wurzelballen des Pflanzenmaterials (17) aus der Trägerschicht (12) zumindest teilweise herausgewachsen sind.

10. Verfahren nach Anspruch 9, **dadurch gekennzeichnet, dass** die Anzucht der Jungpflanzen oder Stecklingen in großflächigen Behältern durchgeführt wird, in denen die Wurzeln (16) oder Wurzelballen des Pflanzenmaterials (17) im Wasser und/oder Nährlösung stehen und/oder durch eine Berieselung von oben das Pflanzenmaterial mit Wasser und/oder Nährlösung versorgt wird.

## Claims

1. Vegetation element for depositing on soil-bound areas, with a support layer (12) of biodegradable material intended for introducing and applying plant material (17) where the support layer (12) is surrounded by a mesh-like or lattice-like cover (14) made of biodegradable material, and where the support layer (12) of individual fibres in random orientation forms a filling of the cover (14), **characterized in that** the support layer (12) and the cover (14) are made of a shared permeable and biodegradable material.

2. Vegetation element according to Claim 1, **characterized in that** the support layer (12) and the cover (14) are made of coconut fibres.

3. Vegetation element according to Claim 1, **characterized in that** the support layer (12) and/or the cover (14) can be employed for establishing plant material (17) without a planting medium.

4. Vegetation element according to one of the preceding claims, **characterized in that** the support layer (12) and the cover (14) form a cushion-shaped unit.

5. Vegetation element according to one of the preceding claims, **characterized in that** the support layer (12) and the cover (14), in horizontal projection, have the shape of a regular polygon, in particular a triangle, quadrangle, pentagon or hexagon.

6. Vegetation element according to one of the preceding claims, **characterized in that** lateral marginal areas of the cover (14) are provided with connection segments by means of which the individual vegetation elements (11) which are arranged side by side on soil bound areas can be coupled with one another.

7. Sales unit of a vegetation element (11) and plant material (17) which is established in the vegetation element (11) where the vegetation element has a support layer (12) for depositing on soil-bound areas, which support layer is surrounded by a mesh-like or lattice-like cover (14) which is made of a shared permeable and biodegradable material, where the support layer (12) of individual fibres in random orientation forms a filling of the cover (14), **characterized in that** roots (16) or root balls of the plant material (17) project at least partially from the support layer (12).

8. Sales unit according to Claim 7, **characterized in that** the roots (16) or root balls of the plant material (17) are anchored within the cover (14) and **in that** preferably at least 30% of a deposit area of the vegetation element (11) on soil-bound areas are covered by roots (16) or root balls of the plant material (17).

9. Process for the production of sales units according to Claim 8, **characterized in that** a number of plantlets or cuttings of a plant material (17) is inserted into the support layer (12) of the vegetation element (11) and **in that** cultivation is effected until the roots (16) or root balls of the plant material (17) have at least partially grown out of the support layer (12).

10. Process according to Claim 9, **characterized in that** the plantlets or cuttings are grown in large-surface containers in which the roots (16) or root balls of the plant material (17) are submerged in water and/or nutrient solution and/or the plant material is supplied with water and/or nutrient solution by overhead trickle irrigation.

## Revendications

1. Elément de végétation destiné à être posé sur des surfaces au sol, comprenant une couche porteuse (12) en matériau décomposable prévu pour introduire et appliquer un matériau végétal (17), la couche porteuse (12) étant entourée par une enveloppe (14) formant des mailles ou un grillage, qui est fabriquée en matériau décomposable et la couche porteuse (12) formant, à partir de fibres individuelles enchevêtrées les unes dans les autres, un remplissage de l'enveloppe (14) **caractérisé en ce que** la couche porteuse (12) et l'enveloppe (14) se composent d'un matériau perméable et décomposable commun.

2. Elément de végétation selon la revendication 1, **caractérisé en ce que** la couche porteuse (12) et l'enveloppe (14) sont fabriquées en fibres de noix de coco.

3. Elément de végétation selon la revendication 1, **caractérisé en ce que** la couche porteuse (12) et/ou l'enveloppe (14) peut être utilisée sans additif de culture pour faire pousser un matériau végétal (17).

4. Elément de végétation selon l'une quelconque des revendications précédentes, **caractérisé en ce que** la couche porteuse (12) et l'enveloppe (14) forment une unité en forme de coussin.

5. Elément de végétation selon l'une quelconque des revendications précédentes, **caractérisé en ce que** la couche porteuse (12) et l'enveloppe (14) présentent, en vue de dessus, la forme d'un polygone régulier, notamment d'un triangle, d'un carré, d'un pentagone ou d'un hexagone.

6. Elément de végétation selon l'une quelconque des revendications précédentes, **caractérisé en ce que** sur des régions de bords latéraux de l'enveloppe (14), on prévoit des portions de connexion qui permettent d'accoupler les uns aux autres les différents éléments de végétation (11) juxtaposés et reposant sur des surfaces au sol.

7. Unité de vente constituée d'une élément de végétation (11) et de matériau végétal (17), qui pousse dans l'élément de végétation (11), l'élément de végétation présentant, pour être posé sur des surfaces au sol, une couche porteuse (12) qui est entourée par une enveloppe (14) formant des mailles ou un grillage, lesquelles sont constitués d'un matériau commun perméable et décomposable, la couche porteuse (12) formant, à partir de fibres individuelles enchevêtrées les unes dans les autres, un remplissage de l'enveloppe (14), **caractérisée en ce que** des racines (16) ou des bulbes du matériau végétal (17) sortent au moins partiellement hors de la couche porteuse (12).

8. Unité de vente selon la revendication 7, **caractérisée en ce que** les racines (16) ou les bulbes du matériau végétal (17) sont ancrés dans l'enveloppe (14) et de préférence au moins 30% d'une surface d'appui de l'élément de végétation (11) sont recouverts sur des surfaces au sol par des racines (16) ou des bulbes du matériau végétal (17).

9. Procédé de fabrication d'unités de vente selon la revendication 8, **caractérisé en ce qu'**une pluralité de jeunes plantes ou de pousses d'un matériau végétal (17) est introduite dans la couche porteuse (12) de l'élément de végétation (11) et **en ce qu'**une culture a lieu jusqu'à ce que les racines (16) ou les bulbes du matériau végétal (17) aient poussé au moins en partie hors de la couche porteuse (12).

10. Procédé selon la revendication 9, **caractérisé en ce que** la culture des jeunes plantes ou des pousses est réalisée dans des conteneurs de grande surface, dans lesquels les racines (16) ou les bulbes du matériau végétal (17) sont dans de l'eau ou une solution nutritive, et/ou sont alimentés en eau et/ou en solution nutritive par un arrosage du matériau végétal par le haut.
